# EUROPEAN PATENT APPLICATION

(11) **EP 4 475 224 A2**
(43) Date of publication of application: **11.12.2024**
(21) Application number: 24179645.7
(22) Date of filing: 03.06.2024
(51) Int. Cl.: H01M 4/38, H01M 4/525, H01M 10/0567, H01M 10/0568, H01M 10/0569

(54) **RECHARGEABLE LITHIUM BATTERY**

(30) Priority: 05.06.2023 KR 20230072447
(71) Applicant: Samsung SDI Co., Ltd., Yongin-si, Gyeonggi-do 17084 (KR)
(72) Inventor: Lim, Jin-Hyeok, 17084 Yongin-si, Gyeonggi-do (KR); Cho, Erang, 17084 Yongin-si, Gyeonggi-do (KR); Koh, Sujeong, 17084 Yongin-si, Gyeonggi-do (KR); Seo, Jinah, 17084 Yongin-si, Gyeonggi-do (KR); Kim, Yunhee, 17084 Yongin-si, Gyeonggi-do (KR)
(74) Representative: Gulde & Partner

(57) **Abstract**

Disclosed are a rechargeable lithium battery including a positive electrode plate; a negative electrode plate; and an electrolyte including an electrolyte additive, in which the current density of the positive electrode plate and the electrolyte additive are controlled, respectively. Details about the current density of the positive electrode plate and the electrolyte additive are as described in the specification.

## Description

### BACKGROUND

### 1. Field of the Invention

Embodiments of this disclosure relate to a rechargeable lithium battery.

### 2. Description of the Related Art

A rechargeable lithium battery may be recharged and has three or more times as high energy density per unit weight as a lead storage battery, nickel-cadmium battery, nickel hydrogen battery, nickel zinc battery, and/or the like and also, may be even charged at a high rate and thus, is commercially manufactured for a laptop, a cell phone, an electric tool, an electric bike, and/or the like, and research on improvement of additional energy density thereof is being actively made.

Such a rechargeable lithium battery is used by injecting an electrolyte into a battery cell including a positive electrode plate and a negative electrode plate.

Recent development of the rechargeable lithium battery has been directed toward high capacity, cycle-life characteristics, rapid charging performance, and/or the like. However, if current density of the positive electrode plate is increased to achieve high capacity of a rechargeable lithium battery, which reduces as wettability of the positive electrode plate to the electrolyte, a lithium dendrite is precipitated on the negative electrode plate surface (for example, an interface of the negative electrode plate with the electrolyte), thereby deteriorating cycle-life characteristics and rapid charging performance of the battery.

Accordingly, an electrolyte for improving the cycle-life characteristics and rapid charging performance as well as realizing high capacity of a rechargeable lithium battery would be beneficial.

### SUMMARY

Some embodiments of the present disclosure improve cycle-life characteristics and rapid charging performance of a rechargeable lithium battery by using an electrolyte additive as well as securing high capacity of the rechargeable lithium battery by increasing the current density of the positive electrode plate.

Embodiments of the present disclosure provide a rechargeable lithium battery including a positive electrode plate; a negative electrode plate; and an electrolyte including the electrolyte additive, in which current density of the positive electrode plate and the additive are respectively controlled.

According to one or more embodiments of the present disclosure a rechargeable lithium battery comprises: a positive electrode plate, a negative electrode plate, and an electrolyte including (e.g. comprising) an electrolyte additive, wherein a current density of the rechargeable lithium battery is about 5.4 mA/cm2 to about 6.6 mA/cm²; and the electrolyte additive includes (e.g. comprises) a polyalkylene glycol-based copolymer.

According to a preferred embodiment, the electrolyte additive may be a copolymer including (e.g. comprising) Repeating Unit 1:
[Repeating Unit 1] 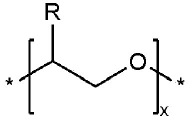 wherein, in Repeating Unit 1, R is a hydrogen atom or an alkyl group having 1 to 20 carbon atoms; and x is an integer from 1 to 20.

According to another preferred embodiment, the electrolyte additive may be a block copolymer including (e.g. comprising or consisting of) Repeating Units 1-1 and 1-2:
[Repeating Unit 1-1] 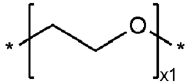 [Repeating Unit 1-2] 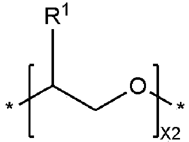 wherein, in Repeating Units 1-1 and 1-2, R1 is an alkyl group having 1 to 20 carbon atoms; and x1 and x2 are each independently integers from 1 to 20.

According to another preferred embodiment, the electrolyte additive may be a block copolymer represented by Chemical Formula 1: 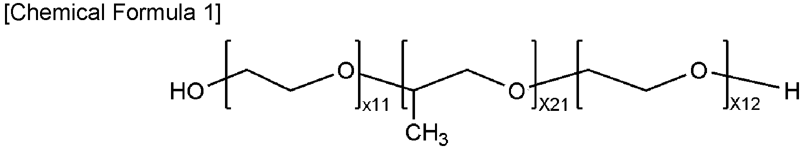 wherein, in Chemical Formula 1, x11, x12, and x21 are each independently integers from 1 to 20.

Preferably, a content of the electrolyte additive in 100 wt% of the electrolyte may be about 0.03 wt% to about 0.5 wt%.

According to another preferred embodiment, the electrolyte may further include (e.g. comprise) a lithium salt and a non-aqueous organic solvent.

Preferably, the lithium salt may include (e.g. comprise) at least one selected from LiPF₆, LiBF₄, LiDFOP (LiPF₂(C₂O₄)₂), LiDFOB (LiBF₂(C₂O₄)), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide or LiFSI), LiC₄F₉SO₃, LiClO₄, LiAlO₂, LiAlCl₄, LiCI, Lil, LiB(C₂O₄)₂ and LiN(CₓF₂ₓ₊₁SO₂)(C_{y}F_{2y+1}SO₂), wherein x and y are each independently integers from 1 to 20, LiCl, Lil, and LiB(C₂O₄)₂ (lithium bis(oxalato) borate or LiBOB).

Further preferred, a concentration of the total lithium salt may be in a range from about 0.1 M to about 2.0 M.

The afore-mentioned non-aqueous organic solvent may include (e.g. comprise) a carbonate-based, ester-based, ether-based, ketone-based, alcohol-based, or (e.g. and/or) aprotic solvent.

Preferably, the non-aqueous organic solvent may include (e.g. comprise) a carbonate-based solvent including (e.g. comprising) a cyclic carbonate and a chain carbonate mixed together in a volume ratio of about 5:95 to about 50:50.

The afore-mentioned cyclic carbonate may include (e.g. comprise or be) ethylene carbonate (EC), and the afore-mentioned chain carbonate may include (e.g. comprise) ethylmethyl carbonate (EMC) and dimethyl carbonate (DMC).

In some embodiments of the rechargeable lithium battery, the positive electrode plate may include (e.g. comprises) a positive electrode mixture layer. Further a loading amount of the positive electrode plate may be about 50.1 mg/cm² to about 65.0 mg/cm².

Preferably, a mixture density of the positive electrode plate may be about 2.0 g/cc to about 6.0 g/cc.

The above-mentioned positive electrode mixture layer may include (e.g. comprise) a positive electrode active material, wherein the positive electrode active material may include (e.g. comprise) a lithium nickel-based composite oxide represented by Chemical Formula A1:

[Chemical Formula A1] Liₐ₁Niₓ₁M¹_{y1}M²_{z1}O_{2-b1}X_{b1}

wherein, in Chemical Formula A1, 0.9≤a1≤1.2, 0.7≤x1≤1, 0≤y1≤0.2, 0≤z1≤0.2,
0.9≤x1+y1+z1≤1.1, and 0≤b1≤0.1;
M1 and M2 are each independently one or more elements selected from Al, B, Ba, Ca, Ce, Co, Cr, Cu, Fe, Mg, Mn, Mo, Nb, Si, Sr, Ti, V, W, and Zr; and
X is one or more elements selected from F, P, and S.

According to another preferred embodiment, the negative electrode plate may include (e.g. comprise) a negative electrode mixture layer. Further, a loading amount of the negative electrode plate may be about 28.2 mg/cm² to about 39.2 mg/cm².

Preferably, a mixture density of the negative electrode plate may be about 1.40 g/cc to about 1.80 g/cc.

Further preferred, the negative electrode mixture layer may include (e.g. comprise) a negative electrode active material, and the negative electrode active material may include (e.g. comprise) at least one selected from graphite and Si composite.

Preferably, the above-mentioned Si composite may include (e.g. comprise) a core including (e.g. comprising) Si particles and amorphous carbon.

The afore-mentioned core including the Si particles may include (e.g. comprise) at least one selected from a Si composite, SiOₖ (0 < k ≤ 2), and an Si alloy.

Further preferred, the Si-C composite may include (e.g. comprise) a core including (e.g. comprising) Si particles and amorphous carbon.

In a rechargeable lithium battery of some embodiments, the electrolyte additive serves as a surfactant. Accordingly, in the rechargeable lithium battery including the electrolyte additive, even though the current density of the positive electrode plate is increased, the wettability of the positive electrode plate to the electrolyte may be improved.

Furthermore, if the wettability of the positive electrode plate with respect to the electrolyte is improved, lithium cations (Li⁺) are uniformly (or substantially uniformly) formed at the interface between the positive electrode plate and the electrolyte, lithium dendrite precipitation on the surface of the negative electrode plate is suppressed or reduced, and ultimately, cycle-life characteristics and rapid charging performance of the rechargeable lithium battery can be secured.

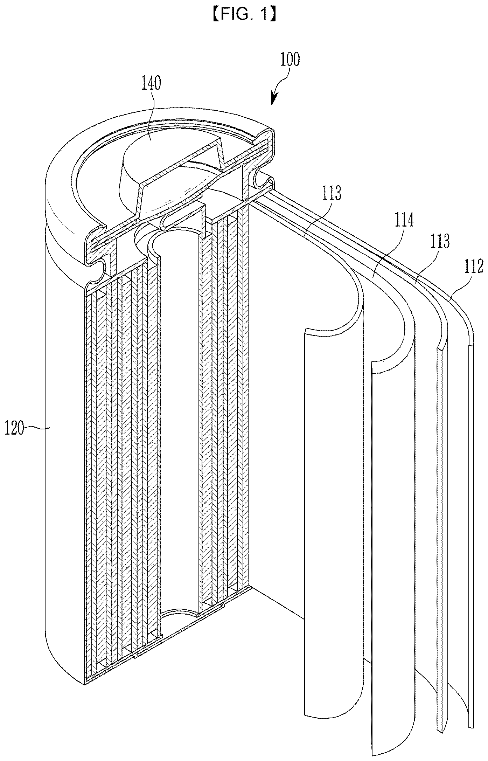

### BRIEF DESCRIPTION OF THE DRAWING

The accompanying drawing, together with the specification, illustrates embodiments of the subject matter of the present disclosure, and, together with the description, serves to explain principles of embodiments of the subject matter of the present disclosure.

The accompanying drawing is a schematic view showing a rechargeable lithium battery according to some embodiments.

### DETAILED DESCRIPTION

As used herein, if specific definition is not otherwise provided, "substituted" refers to replacement of at least one hydrogen of a compound by a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, if specific definition is not otherwise provided, "heterocycloalkyl group", "heterocycloalkenyl group", "heterocycloalkynyl group," and "heterocycloalkylene group" refer to the presence of at least one N, O, S, or P in a cyclic compound of cycloalkyl, cycloalkenyl, cycloalkynyl, or cycloalkylene.

In the chemical formula of the present specification, unless a specific definition is otherwise provided, hydrogen is bonded at positions where a chemical bond is not drawn where supposed to be given.

As used herein, "current density of the electrode plate" may refer to a size (density) of the current flowing per unit area of the positive electrode plate or the negative electrode plate.

As used herein, "loading amount of the electrode plate" may be a value calculated by dividing a weight of the components (active material, conductive material, binder, etc.) excluding the current collector in the positive electrode plate or negative electrode plate by an area thereof.

As used herein, "mixture density of electrode plates" may be a value calculated by dividing a weight of components (active material, conductive material, binder, etc.) excluding the current collector in the positive electrode plate or negative electrode plate by a volume thereof.

As used herein, "weight average molecular weight" may be a value measured by gel permeation chromatography (GPC, PL GPC220, Agilent Technologies) and corrected with a cubic function using polystyrene.

As used herein, a "homopolymer" may be a polymer derived from a single species of monomer.

As used herein, a "copolymer" may be a polymer derived from more than one species of monomer resulting in two or more constitutionally different repeating units. For instance, a copolymer may be a polymer comprising Repeating Unit 1:
[Repeating Unit 1] 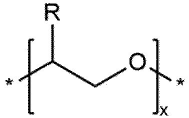 wherein, in Repeating Unit 1, R is a hydrogen atom or an alkyl group having 1 to 20 carbon atoms; and x is an integer from 1 to 20; and further comprising at least one more constitutionally different repeating unit. Hereinafter, a rechargeable lithium battery according to some embodiments will be described in more detail with reference to the attached drawing. However, these embodiments are examples, the present disclosure is not limited thereto and the present disclosure is defined by the scope of the appended claims and equivalents thereof.

In some embodiments, a rechargeable lithium battery includes a positive electrode plate; a negative electrode plate; and an electrolyte including an additive, wherein a current density is about 5.4 mA/cm² to about 6.6 mA/cm², and the electrolyte additive includes a polyalkylene glycol-based copolymer.

In a rechargeable lithium battery of some embodiments, the electrolyte additive serves as a surfactant. Accordingly, in a rechargeable lithium battery including the electrolyte additive, the wettability of the electrode to the electrolyte can be improved even if the current density is increased (about 5.4 mA/cm² or more).

Furthermore, if the wettability of the positive electrode plate with respect to the electrolyte is improved, lithium cations (Li⁺) are uniformly (or substantially uniformly) formed at the interface between the positive electrode plate and the electrolyte, lithium dendrite precipitation on the surface of the negative electrode plate is suppressed or reduced, and ultimately, cycle-life characteristics and rapid charging performance of the rechargeable lithium battery can be secured.

In a rechargeable lithium battery that does not include the electrolyte additive, if the current density of the positive electrode plate is increased, the wettability of the positive electrode plate with respect to the electrolyte may be insufficient.

If the wettability of the positive electrode plate with respect to the electrolyte is insufficient, lithium cation flux (Li⁺) is formed unevenly at the interface between the positive electrode plate and the electrolyte, and a sharp lithium dendrite is precipitated on the surface of the negative electrode plate, which can ultimately impede cycle-life characteristics and rapid charging performance of the rechargeable lithium battery.

Some embodiments of the present disclosure increase the current density of the positive electrode plate to increase the capacity of the rechargeable lithium battery, and improve cycle-life characteristics and rapid charging performance by using the electrolyte additive.

Hereinafter, the rechargeable lithium battery will be described in more detail.

A current density of the positive electrode plate may be about 5.4 mA/cm² to about 6.6 mA/cm², specifically about 5.4 mA/cm² to about 6.3 mA/cm², or, for example about 5.4 mA/cm² to about 5.8 mA/cm².

If the current density of the positive electrode plate is less than about 5.4 mA/cm², there is a limit to implementing a high-capacity rechargeable battery. If the current density of the positive electrode plate exceeds about 6.6 mA/cm², a thickness of the positive electrode plate may become too thick, and the wettability of the positive electrode plate may decrease.

The electrolyte additive may be (e.g. may consist of or may consist essentially of) a polyalkylene glycol-based copolymer. The electrolyte additive may comprise a polyalkylene glycol-based copolymer.

In some embodiments, the electrolyte additive may be (e.g. may consist of or may consist essentially of) a copolymer including (e.g. comprising) Repeating Unit 1. Repeating Unit 1 corresponds to an alkylene glycol-based repeating unit:
[Repeating Unit 1] 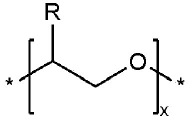 wherein, in Repeating Unit 1, R is a hydrogen atom or an alkyl group having 1 to 20 carbon atoms; and x is an integer from 1 to 20.

In some embodiments, the electrolyte additive may be (e.g. may consist of or may consist essentially of) a block copolymer including (e.g. comprising or consisting of) Repeating Units 1-1 and 1-2.
[Repeating Unit 1-1] 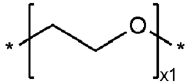 [Repeating Unit 1-2]

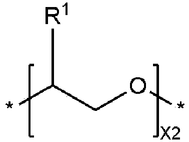

In Repeating Units 1-1 and 1-2, R¹ is an alkyl group having 1 to 20 carbon atoms; and x1 and x2 are each independently integers from 1 to 20.

Repeating Unit 1-1 corresponds to an ethylene glycol based repeating unit.

In some embodiments, R¹ may be an alkyl group (e.g., a methyl group) having 1 carbon atom. In some embodiments, Repeating Unit 1-2 corresponds to a propylene glycol based repeating unit.

In some embodiments, the electrolyte additive may be a block copolymer represented by Chemical Formula 1: 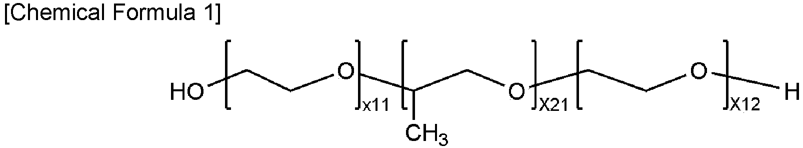 A block copolymer represented by Chemical Formula 1 may also be expressed as PEG-b-PPP-b-PEG.

In Chemical Formula 1, x11, x12, and x21 are each independently integers from 1 to 20.

If the electrolyte additive is a block copolymer including the three types of repeating units, a weight average molecular weight of the electrolyte additive may be about 800 g/mol to about 1500 g/mol, for example, about 900 g/mol to about 1300 g/mol, or, for example, about 1000 g/mol to about 1200 g/mol.

If the weight average molecular weight of the electrolyte additive is more than about 1500 g/mol, it becomes a block copolymer including four or more types of repeating units, which excessively increases the viscosity of the electrolyte and impedes cycle-life characteristics and rapid charging performance of the rechargeable lithium battery. If the weight average molecular weight of the electrolyte additive is less than about 800 g/mol, it becomes homopolymer or a block copolymer including two types of repeating units, but its effect as a surfactant is minimal, which may impede cycle-life characteristics and rapid charging performance of the rechargeable lithium battery.

A content of the electrolyte additive in 100 wt% of the electrolyte may be about 0.03 wt% to about 0.5 wt%, for example, about 0.03 wt% to about 0.3 wt%, or, for example, about 0.1 wt% to about 0.3 wt% based on 100 wt% of the electrolyte.

If the content of the electrolyte additive in 100 wt% of the electrolyte exceeds about 0.5 wt%, the viscosity of the electrolyte may be excessively increased and cycle-life characteristics and rapid charging performance of the rechargeable lithium battery may be impaired. If the content of the electrolyte additive in 100 wt% of the electrolyte is less than about 0.03 wt%, the effect as a surfactant is minimal, which may impede cycle-life characteristics and rapid charging performance of the rechargeable lithium battery.

The lithium salt is dissolved in a non-aqueous organic solvent, supplies a battery with lithium ions, basically operates the rechargeable lithium battery, and improves transportation of the lithium ions between positive and negative electrode plates. Examples of the lithium salt may include (e.g. comprise) at least one selected from LiPF₆, LiBF₄, LiPF₂(C₂O₄)₂ (also called lithium difluorobis(oxalato)phosphate or LiDFOP), LiBF₂(C₂O₄) (also called lithium difluoro(oxalato)borate or LiDFOB), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (also called lithium bis(fluorosulfonyl)imide or LiFSI), LiC₄F₉SO₃, LiClO₄, LiAlO₂, LiAlCl₄, LiN(CₓF₂ₓ₊₁SO₂)(C_{y}F_{2y+1}SO₂), wherein x and y are natural numbers, for example, integers from 1 to 20, LiCl, Lil, and LiB(C₂O₄)₂ (also called lithium bis(oxalato) borate or LiBOB). A concentration of the lithium salt may be used within a range of about 0.1 M to about 2.0 M. If the concentration of the lithium salt is within the above range, the electrolyte has suitable or appropriate conductivity (e.g., electrical and/or ionic conductivity) and viscosity, and thus excellent electrolyte performance can be exhibited, and lithium ions can move effectively.

The non-aqueous organic solvent serves as a medium for transmitting ions taking part in the electrochemical reaction of a battery.

The non-aqueous organic solvent may include (e.g. comprise) at least one selected from a carbonate-based, ester-based, ether-based, ketone-based, alcohol-based, and/or aprotic solvent.

The carbonate-based solvent may include (e.g. comprise) at least one selected from ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include (e.g. comprise) at least one selected from methyl acetate, ethyl acetate, n-propyl acetate, t-butyl acetate, methylpropionate, ethyl propionate, propylpropionate, decanolide, mevalonolactone, caprolactone, and/or the like. The ether-based solvent may include (e.g. comprise) at least one selected from dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include (e.g. comprise) at least one selected from ethyl alcohol, isopropyl alcohol, and/or the like, and examples of the aprotic solvent include nitriles such as R-CN (wherein R is a C2 to C20 linear, branched, and/or cyclic hydrocarbon group, a double bond, an aromatic ring, and/or an ether bond), amides such as dimethylformamide, dioxolanes such as 1,3-dioxolane, sulfolanes, and/or the like.

The non-aqueous organic solvent may be used singularly or in a mixture, if the organic solvent is used in a mixture, the mixture ratio may be controlled in accordance with a suitable or desirable battery performance.

The carbonate-based solvent is prepared by mixing a cyclic carbonate and a linear carbonate. The cyclic carbonate and chain carbonate are mixed together in a volume ratio of about 5:95 to about 50:50. If the mixture is used as an electrolyte, it may have enhanced performance.

For example, ethylene carbonate (EC) may be used as the cyclic carbonate, and ethylmethyl carbonate (EMC) and/or dimethyl carbonate (DMC) may be used as the chain carbonate.

For example, the non-aqueous organic solvent may include a carbonate-based solvent in which ethylene carbonate (EC), ethylmethyl carbonate (EMC), and dimethyl carbonate (DMC) are mixed together. For example, the carbonate-based solvent in which ethylene carbonate (EC), ethylmethyl carbonate (EMC), and dimethyl carbonate (DMC) are mixed together in a volume ratio of EC:EMC:DMC = 1:0.5:5 to 5:3:10 may exhibit improved performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be an aromatic hydrocarbon-based compound represented by Chemical Formula 3.

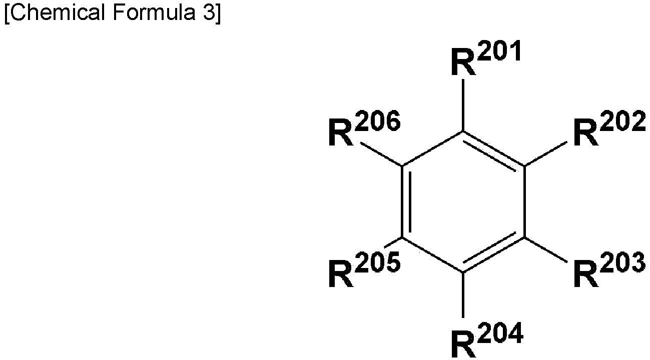

In Chemical Formula 3, R²⁰¹ to R²⁰⁶ are the same or different and are selected from hydrogen, a halogen, a C1 to C20 alkyl group, a haloalkyl group, and a combination thereof.

Examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, vinyl ethylene carbonate, and/or an ethylene carbonate-based compound represented by Chemical Formula 4 to improve cycle-life of a battery as a cycle life-enhancing additive.

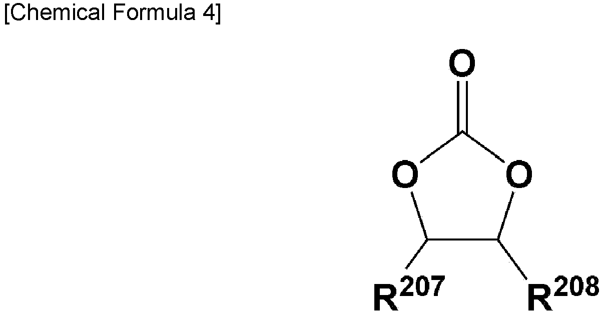

In Chemical Formula 4, R²⁰⁷ and R²⁰⁸ are the same or different and are selected from hydrogen, a halogen, a cyano group (CN), a nitro group (NO₂), or a C1 to C5 fluoroalkyl group, provided that at least one of R²⁰⁷ and R²⁰⁸ is a halogen, a cyano group (CN), a nitro group (NO₂), or a C1 to C5 fluoroalkyl group, and R²⁰⁷ and R²⁰⁸ are not concurrently (e.g., simultaneously) hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be used within a suitable or appropriate range.

A loading amount of the positive electrode plate may be about 50.1 mg/cm² to about 65.0 mg/cm², or, for example, about 50.1 mg/cm² to about 59.1 mg/cm². In some embodiments, a mixture density of the positive electrode plate may be about 2.0 g/cc to about 6.0 g/cc, or, for example, about 3.0 g/cc to about 5.0 g/cc.

If each of the above ranges is satisfied, the energy density of the rechargeable lithium battery can be increased.

The positive electrode plate includes a positive electrode current collector and a positive electrode mixture layer on the positive electrode current collector, and the positive electrode mixture layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or a combination thereof may be used.

The composite oxide having a coating layer on the surface thereof may be used, or a mixture of the composite oxide and the composite oxide having a coating layer may be used. The coating layer may include a coating element compound of an oxide of a coating element, a hydroxide of the coating element, an oxyhydroxide of the coating element, an oxycarbonate of the coating element, or a hydroxycarbonate of the coating element. The compound for the coating layer may be either amorphous and/or crystalline. The coating element included in the coating layer may be Mg, Al, Co, K, Na, Ca, Si, Ti, V, Sn, Ge, Ga, B, As, Zr, or a mixture thereof. The coating process may include any suitable processes as long as it does not cause any side effects (e.g., any undesirable side effects) on the properties of the positive electrode active material (e.g., may be spray coating, dipping), which should be readily recognizable to persons having ordinary skill in this art upon reviewing this disclosure, and thus a detailed description thereof is not necessary here.

For example, the positive electrode active material may include a lithium nickel-based composite oxide represented by Chemical Formula A1:

[Chemical Formula A1] Liₐ₁Niₓ₁M¹_{y1}M²_{z1}O_{2-b1}X_{b1}

In Chemical Formula A1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² are each independently one or more elements selected from Al, B, Ba, Ca, Ce, Co, Cr, Cu, Fe, Mg, Mn, Mo, Nb, Si, Sr, Ti, V, W, and Zr; and X is one or more elements selected from F, P, and S.

In some embodiments, in Chemical Formula A1, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y1≤0.1, and 0≤z1≤0.1.

For example, the positive electrode active material may include a lithium nickel-based composite oxide represented by Chemical Formula A2. The compound represented by Chemical Formula A2 may be referred to as a lithium nickel cobalt-based composite oxide:

[Chemical Formula A2] Liₐ₂Niₓ₂Co_{y2}M³_{z2}O_{2-b2}X_{b2}

In Chemical Formula A2, 0.9≤a2≤1.8, 0.7≤x2<1, 0<y2≤0.2, 0≤z2≤0.2, 0.9≤x2+y2+z2≤1.1, and 0≤b2≤0.1, M³ is one or more elements selected from Al, B, Ba, Ca, Ce, Cr, Fe, Mg, Mn, Mo, Nb, Si, Sr, Ti, V, W, and Zr, and X is one or more elements selected from F, P, and S.

In some embodiments, in Chemical Formula A2, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

For example, the positive electrode active material may include a lithium nickel-based composite oxide represented by Chemical Formula A3. The compound represented by Chemical Formula A3 may be referred to as lithium nickel-cobalt-aluminum oxide or lithium nickel-cobalt-manganese oxide:

[Chemical Formula A3] Liₐ₃Niₓ₃Co_{y3}M⁴_{z3}M⁵_{w3}O_{2-b3}X_{b3}

In Chemical Formula A3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is one or more elements selected from Al and Mn, M⁵ is one or more elements selected from B, Ba, Ca, Ce, Cr, Fe, Mg, Mo, Nb, Si, Sr, Ti, V, W, and Zr, and X is one or more elements selected from F, P, and S.

In some embodiments, in Chemical Formula A3, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

For example, the positive electrode active material may include a lithium nickel-based composite oxide represented by Chemical Formula A4. The compound represented by Chemical Formula A4 may be referred to as a cobalt-free lithium nickel-manganese oxide:

[Chemical Formula A4] Liₐ₄Niₓ₄Mn_{y4}M⁶_{z4}O_{2-b4}X_{b4}

In Chemical Formula A4, 0.9≤a2≤1.8, 0.7≤x4<1, 0<y4≤0.2, 0≤z4≤0.2, 0.9≤x4+y4+z4≤1.1, and 0≤b4≤0.1 M⁶ is one or more elements selected from Al, B, Ba, Ca, Ce, Cr, Fe, Mg, Mo, Nb, Si, Sr, Ti, V, W, and Zr, and X is one or more elements selected from F, P, and S.

In the positive electrode plate of some embodiments, a content of the positive electrode active material may be about 50 wt% to about 99 wt%, about 60 wt% to about 99 wt%, about 70 wt% to about 99 wt%, about 80 wt% to about 99 wt%, or about 90 wt% to about 99 wt% based on a total weight of the positive electrode mixture layer.

In some embodiments, the positive electrode mixture layer may optionally include a conductive material (e.g., an electrically conductive material) and a binder. At this time, the content of the conductive material and binder may be about 1.0 wt% to about 5.0 wt%, respectively, based on a total weight of the positive electrode mixture layer.

The conductive material is used to impart conductivity (e.g., electrical conductivity) to the positive electrode plate, and any suitable electrically conductive material may be used as a conductive material unless it causes a chemical change in a battery (e.g., an undesirable chemical change in a rechargeable lithium battery). Examples of the conductive material may include (e.g. comprise) a carbon-based material such as natural graphite, artificial graphite, carbon black, acetylene black, ketjen black, carbon fiber, and the like; a metal-based material of a metal powder and/or a metal fiber including copper, nickel, aluminum, silver, and the like; a conductive polymer (e.g., an electrically conductive polymer) such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

A loading amount of the negative electrode plate may about 28.2 mg/cm² to about 39.2 mg/cm², or, for example, about 28.2 mg/cm² to about 33.5 g mg/cm².

In some embodiments, a mixture density of the negative electrode plate may be about 2.0 g/cc to about 1.0 g/cc, or, for example, about 1.74 g/cc to about 1.54 g/cc.

If each of the above ranges is satisfied, the energy density of the rechargeable lithium battery can be increased.

The negative electrode plate includes a negative electrode current collector and a negative electrode active material layer including the negative electrode active material on the negative electrode current collector.

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions includes carbon materials. The carbon material may be any suitable, generally-used carbon-based negative electrode active material in a rechargeable lithium battery. Examples of the carbon material include crystalline carbon, amorphous carbon, and a combination thereof. The crystalline carbon may be irregular-shaped, and/or sheet, flake, spherical, and/or fiber shaped natural graphite and/or artificial graphite. The amorphous carbon may be a soft carbon, a hard carbon, a mesophase pitch carbonized product, fired coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and/or the like. At least one of the foregoing may be mixed together with SiO₂.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be a vanadium oxide, a lithium vanadium oxide, and/or the like.

In some embodiments, the negative electrode active material may include at least one selected from graphite and a Si composite.

The Si composite may include a core including Si particles and amorphous carbon, for example, the Si particles may include at least one selected from Si composite, SiOₓ (0 < x ≤ 2), and an Si alloy.

For example, the Si-C composite may include a core including Si particles and amorphous carbon.

A central portion of the core may include pores, and a radius of the central portion may correspond to about 30% to about 50% of a radius of the Si-C composite.

The Si particles may have an average particle diameter of about 10 nm to about 200 nm.

As used herein, the average particle diameter may be a particle size (D50) at a volume ratio of 50% in a cumulative size-distribution curve.

If the average particle diameter of the Si particle is within the above range, volume expansion occurring during charging and discharging may be suppressed or reduced, and a disconnection of a conductive path (e.g., an electrically conductive path) due to particle crushing during charging and discharging may be prevented or reduced.

The Si particle may be included in an amount of about 1 wt% to about 60 wt%, for example, about 3 wt% to about 60 wt%, based on a total weight of the Si-C composite.

The central portion may not include amorphous carbon, and the amorphous carbon may be present only on the surface portion of the negative electrode active material.

Herein, the surface portion indicates a region from the central portion of the negative electrode active material to the outermost surface of the negative electrode active material.

In some embodiments, the Si particles are substantially uniformly included over the negative electrode active material, for example, are present at a substantially uniform concentration in the central portion and the surface portion thereof.

The amorphous carbon may be soft carbon, hard carbon, mesophase pitch carbonized product, calcined coke, or a combination thereof.

The negative electrode active material may further include crystalline carbon.

If the negative electrode active material includes a Si-C composite and crystalline carbon together, the Si-C composite and crystalline carbon may be included in the form of a mixture, and in some embodiments, the Si-C composite and crystalline carbon may be included in a weight ratio of about 1:99 to about 50:50. For example, the Si-C composite and crystalline carbon may be included in a weight ratio of about 3 : 97 to about 20 : 80 or about 5 : 95 to about 20 : 80.

The crystalline carbon may be for example graphite, and, for example, natural graphite, artificial graphite, or a mixture thereof.

The crystalline carbon may have an average particle diameter of about 5 µm to about 30 µm.

The amorphous carbon precursor may include a coal-based pitch, mesophase pitch, petroleum-based pitch, coal-based oil, petroleum-based heavy oil, and/or a polymer resin such as, for example, a phenol resin, a furan resin, and/or a polyimide resin.

In the negative electrode active material layer, the negative electrode active material may be included in an amount of about 95 wt% to about 99 wt% based on a total weight of the negative electrode active material layer.

In some embodiments, the negative electrode active material layer may include a binder, and optionally a conductive material (e.g., an electrically conductive material). In the negative electrode active material layer, the amount of the binder may be about 1 wt% to about 5 wt% based on a total weight of the negative electrode active material layer. If the negative electrode active material layer further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder and/or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and a combination thereof.

If the water-soluble binder is used as the negative electrode binder, a cellulose-based compound may be further used to provide or increase viscosity as a thickener. The cellulose-based compound may include one or more of carboxylmethyl cellulose, hydroxypropylmethyl cellulose, methyl cellulose, or an alkali metal salt thereof. The alkali metal may be Na, K, and/or Li. Such a thickener may be included in an amount of about 0.1 to about 3 parts by weight based on 100 parts by weight of the negative electrode active material.

The conductive material is used to impart conductivity (e.g., electrical conductivity) to the electrode, and any suitable electrically conductive material may be used as a conductive material unless it causes a chemical change in a battery (e.g., an undesirable chemical change in a rechargeable lithium battery). Examples of the conductive material may include a carbon-based material such as natural graphite, artificial graphite, carbon black, acetylene black, ketjen black, carbon fiber, and the like; a metal-based material of a metal powder and/or a metal fiber including copper, nickel, aluminum, silver, and the like; a conductive polymer (e.g., an electrically conductive polymer) such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive metal), and a combination thereof.

The rechargeable lithium battery may further include a separator between the positive electrode plate and the negative electrode plate, depending on a type (or kind) of the rechargeable lithium battery. Such a separator is a porous substrate; or it may be a composite porous substrate.

The porous substrate may be a substrate including pores, and lithium ions may move through the pores. The porous substrate may include, for example, polyethylene, polypropylene, polyvinylidene fluoride, and multi-layers thereof such as, for example, a polyethylene/polypropylene double-layered separator, a polyethylene/polypropylene/polyethylene triple-layered separator, and/or a polypropylene/polyethylene/polypropylene triple-layered separator.

The composite porous substrate may have a form including a porous substrate and a functional layer on the porous substrate. The functional layer may be, for example, at least one selected from a heat-resistant layer and an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler and/or an inorganic filler.

Referring to the accompanying drawing, a rechargeable lithium battery 100 according to some embodiments includes a battery cell including a negative electrode plate 112, a positive electrode plate 114 facing the negative electrode plate 112, a separator 113 between the negative electrode plate 112 and the positive electrode plate 114, and an electrolyte (not shown) impregnating the negative electrode plate 112, the positive electrode plate 114, and the separator 113, a battery case 120 housing the battery cell, and a sealing member 140 that seals the battery case 120.

Hereinafter, examples of the present disclosure and comparative examples are described. These examples, however, are not in any sense to be interpreted as limiting the scope of the present disclosure.

### Preparation of electrolyte for rechargeable lithium battery

### Preparation Example 1

As a non-aqueous organic solvent, a carbonate-based solvent prepared by mixing together ethylene carbonate (EC): ethylmethyl carbonate (EMC): dimethyl carbonate (DMC) = 20:10:70 in a volume ratio was used.

To the non-aqueous organic solvent, 1.5 M of a lithium salt (LiPF₆) was added, and 0.03 wt% of a block copolymer represented by Chemical Formula 1 was added thereto as an electrolyte additive to finally obtain an electrolyte for a rechargeable lithium battery:

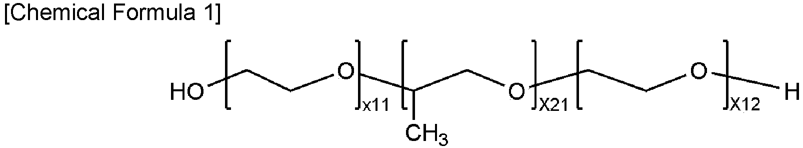

In Chemical Formula 1, x11, x12, and x21 are each independently integers from 1 to 20.

The block copolymer represented by Chemical Formula 1 had a weight average molecular weight of about 1,100 g/mol, which was obtained by measuring through GPC (gel permeation chromatography) by using PL GPC220 (Agilent Technologies, Inc.) and correcting into a cubic function by using polystyrene.

In addition, the content (wt%) of the electrolyte additive indicates a content (wt%) based on 100 wt% of the electrolyte for a rechargeable lithium battery (non-aqueous organic solvent+lithium salt+additive). Hereinafter, this will be equally applied.

### Preparation Example 2

An electrolyte for a rechargeable lithium battery is prepared in the same manner as in Preparation Example 1 except that the block copolymer represented by Chemical Formula 1 was added in an amount of 0.1 wt% as the electrolyte additive.

### Preparation Example 3

An electrolyte for a rechargeable lithium battery is prepared in the same manner as in Preparation Example 1 except that the block copolymer represented by Chemical Formula 1 was added in an amount of 0.3 wt% as the electrolyte additive.

### Preparation Example 4

An electrolyte for a rechargeable lithium battery is prepared in the same manner as in Preparation Example 1 except that the block copolymer represented by Chemical Formula 1 was added in an amount of 0.5 wt% as the electrolyte additive.

### Comparative Preparation Example 1

An electrolyte for a rechargeable lithium battery is prepared in the same manner as in Preparation Example 1 except that the electrolyte additive was not added at all.

### Comparative Preparation Example 2

A homopolymer consisting of Repeating Unit 1-1 was used in an amount of 0.1 wt% as the electrolyte additive.

### [Repeating Unit 1-1]

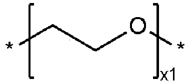

In Repeating Unit 1-1, x is an integer from 1 to 20.

The homopolymer consisting of Repeating Unit 1-1 alone had a weight average molecular weight of about 1,000 g/mol, which was obtained by measuring through GPC (gel permeation chromatography) by using PL GPC220, Agilent Technologies Inc.) and correcting by using polystyrene into a cubic function.

### Manufacture of Rechargeable Lithium Battery Cell

### Example 1-1

### (1) Manufacture of Positive Electrode Plate

LiNi_{0.88}Co_{0.07}Al_{0.05}O₂ as a positive electrode active material, polyvinylidene fluoride as a binder, and ketjen black as a conductive material were mixed together respectively in a weight ratio of 97:2:1 and then, dispersed in N-methyl pyrrolidone to prepare a positive electrode slurry.

The positive electrode slurry was coated on a 14 µm-thick Al foil, dried at 110 °C, and pressed to manufacture a positive electrode plate.

The positive electrode plate had a loading amount of 50.1 mg/cm², mixture density of 4.0 g/cc and current density of 5.4 mA/cm².

Each of the above measurement methods is the same as in the following examples and comparative examples.

### (2) Manufacture of Negative Electrode Plate

A mixture of artificial graphite and a Si-C composite in a weight ratio of 93:7 was prepared as a negative electrode active material, and the negative electrode active material, a styrene-butadiene rubber binder, and carboxylmethyl cellulose in a weight ratio of 97:1:2 were dispersed in distilled water to prepare a negative electrode slurry.

The Si-C composite had a core including artificial graphite and silicon particles and coal pitch coated on the surface of the core.

The negative electrode slurry was coated on a 10 µm-thick Cu foil, dried at 100 °C, and pressed to manufacture a negative electrode plate.

The negative electrode plate had a loading amount of 50.1 mg/cm² and mixture density of 1.64 g/cc.

Each of the above measurement methods are the same as in the following examples and comparative examples.

### (3) Manufacture of rechargeable lithium battery cell

A rechargeable lithium battery cell was manufactured by assembling the positive and negative electrode plates with a 25 µm-thick polyethylene separator to obtain an electrode assembly and injecting the electrolyte for a rechargeable lithium battery according to Preparation Example 1 thereinto.

### Example 1-2

A rechargeable lithium battery cell was manufactured in the same manner as in Example 1 except that the electrolyte for a rechargeable lithium battery according to Preparation Example 2 was injected.

### Example 1-3

A rechargeable lithium battery cell was manufactured in the same manner as in Example 1 except that the electrolyte for a rechargeable lithium battery according to Preparation Example 3 was injected.

### Example 1-4

A rechargeable lithium battery cell was manufactured in the same manner as in Example 1 except that the electrolyte for a rechargeable lithium battery according to Preparation Example 4 was injected.

### Comparative Example 1-1

A rechargeable lithium battery cell was manufactured in the same manner as in Example 1 except that the electrolyte for a rechargeable lithium battery according to Comparative Example 1 was injected.

### Comparative Example 1-2

A rechargeable lithium battery cell was manufactured in the same manner as in Example 1 except that the electrolyte for a rechargeable lithium battery according to Comparative Example 2 was injected.

### Examples 2 to 4 and Comparative Examples 2 to 6

Each rechargeable lithium battery cell was manufactured in the same manner as in Example 2 except that the loading amount and the mixture density; and current density of the positive electrode plate were changed as shown in Table 1.

**Table 1**

| | Amount of electrolyte additive (wt%) | Positive electrode plate | | | Negative electrode plate | |
|---|---|---|---|---|---|---|
| | | Current density (mA/cm²) | Loading amount (mg/cm²) | Mixture density (g/cc) | Loading amount (mg/cm²) | Mixture density (g/cc) |
| Comp. Ex. 1-1 | - | 5.4 | 50.1 | 4.0 | 28.2 | 1.64 |
| Comp. Ex. 1-2 | 0.1 (Repeating Unit 1) | 5.4 | 50.1 | 4.0 | 28.2 | 1.64 |
| Ex. 1-1 | 0.03 (Chemical Formula 1) | 5.4 | 50.1 | 4.0 | 28.2 | 1.64 |
| Ex. 1-2 | 0.1 (Chemical Formula 1) | 5.4 | 50.1 | 4.0 | 28.2 | 1.64 |
| Ex. 1-3 | 0.3 (Chemical Formula 1) | 5.4 | 50.1 | 4.0 | 28.2 | 1.64 |
| Ex. 1-4 | 0.5 (Chemical Formula 1) | 5.4 | 50.1 | 4.0 | 28.2 | 1.64 |
| Comp. Ex. 2 | - | 5.8 | 55.0 | 4.0 | 31.5 | 1.64 |
| Ex. 2 | 0.1 (Chemical Formula 1) | 5.8 | 55.0 | 4.0 | 31.5 | 1.64 |
| Comp. Ex. 3 | - | 6.3 | 59.1 | 4.0 | 33.5 | 1.64 |
| Ex. 3 | 0.1 (Chemical Formula 1) | 6.3 | 59.1 | 4.0 | 33.5 | 1.64 |
| Comp. Ex. 4 | - | 6.6 | 65.0 | 4.0 | 39.2 | 1.64 |
| Ex. 4 | 0.1 (Chemical Formula 1) | 6.6 | 65.0 | 4.0 | 39.2 | 1.64 |
| Comp. Ex. 5 | - | 4.0 | 44.7 | 4.0 | 24.6 | 1.64 |
| Comp. Ex. 6 | 0.1 (Chemical Formula 1) | 4.0 | 44.7 | 4.0 | 24.6 | 1.64 |
| Comp. Ex. 7 | - | 3.3 | 37.7 | 4.0 | 20.6 | 1.64 |
| Comp. Ex. 8 | 0.1 (Chemical Formula 1) | 3.3 | 37.7 | 4.0 | 20.6 | 1.64 |

### Evaluation 1: Evaluation of Impregnation Characteristics of Electrolyte

Each of the positive electrode plates of the examples and the comparative examples was evaluated with respect to impregnation characteristics of an electrolyte, and the results are shown in Table 2.

Specifically, the electrolyte was prepared by mixing together ethylene carbonate (EC): ethylmethyl carbonate (EMC): dimethyl carbonate (DMC) = 2:2:4 in a volume ratio to prepare a carbonate-based solvent and dissolving 1.0 M LiPF₆ therein.

The electrolyte was dropped on each positive electrode plate sample with a size of 3 cm*3 cm to measure an impregnation area of the electrolyte.

### Evaluation 2: Evaluation of Cycle-life Characteristics

Each of the rechargeable lithium battery cells of the examples and the comparative examples was evaluated with respect to cycle-life characteristics, and the results are shown in Table 2.

The cells were 287 times charged and discharged under 0.33 C charge conditions (CC/CV, 4.45 V, 0.025 C Cut-off) /1.0 C discharge conditions (CC, 2.5 V Cut-off) at 25 °C and evaluated with respect to capacity retention rate according to Equation 1. Capacity retention rate = (discharge capacity after 287 cycles / discharge capacity after 1 cycle) * 100

### Evaluation 3: Evaluation of Li Precipitation Amount

Each of the rechargeable lithium battery cells according to the examples and the comparative examples was evaluated with respect to a Li precipitation amount, and the results are shown in Table 2.

The cells were charged to SOC 80% at 25 °C to measure charge capacity and also, discharged at 1.0 C (CC, 2.5 V Cut-off) to measure lithium precipitation capacity on the negative electrode plate surface in a discharge plateau section, which were used to evaluate a Li precipitation amount according to Equation 2. Li precipitation amount: Lithium percipitation capacity (discharge plateau section)/charge capacity (soc80 charge amount) x 100

**Table 2**

| | Impregnation characteristics | Cycle-life | Li precipitation amount |
|---|---|---|---|
| | Impregnation area after 10s [cm²] | Capa.[%] @287 cy. | [%] |
| Comp. Ex. 1-1 | 2.913 | 90.8 | 1.01 |
| Comp. Ex. 1-2 | 2.897 | 90.5 | 1.60 |
| Ex. 1-1 | 3.801 | 91.5 | 1.30 |
| Ex. 1-2 | 3.908 | 92.2 | 0.92 |
| Ex. 1-3 | 4.062 | 92.5 | 0.90 |
| Ex. 1-4 | 3.950 | 92.1 | 0.95 |
| Comp. Ex. 2 | 1.799 | 89.6 | 1.10 |
| Ex. 2 | 3.611 | 91.9 | 0.97 |
| Comp. Ex. 3 | 0.785 | 88.0 | 1.21 |
| Ex. 3 | 2.543 | 91.5 | 1.03 |
| Comp. Ex. 4 | 0.574 | 85.0 | 1.70 |
| Ex. 4 | 1.713 | 87.9 | 1.57 |
| Comp. Ex. 5 | 4.203 | 92.7 | 0.65 |
| Comp. Ex. 6 | 4.213 | 92.7 | 0.66 |
| Comp. Ex. 7 | 4.525 | 93.1 | 0.61 |
| Comp. Ex. 8 | 4.520 | 93.0 | 0.63 |

Referring to Table 2, if the positive electrode plate has the same current density, the rechargeable lithium battery cells including a polyalkylene glycol-based copolymer as an electrolyte additive, compared with the cells including no electrolyte additive at all, exhibited an increased cycle-life but a decreased Li precipitation amount. However, if the positive electrode plate had current density of less than 5.4 mA/cm², there were limitations in achieving high-capacity rechargeable batteries.

In the rechargeable lithium batteries of some embodiments, the electrolyte additive serves as a surfactant. Accordingly, the rechargeable lithium batteries including the electrolyte additive exhibited improved wettability of the positive electrode plate to the electrolyte, even though current density of the positive electrode plate was increased.

Furthermore, if the wettability of the positive electrode plate with respect to the electrolyte is improved, lithium cations (Li⁺) are uniformly (or substantially uniformly) formed at the interface between the positive electrode plate and the electrolyte, lithium dendrite precipitation on the surface of the negative electrode plate is suppressed or reduced, and ultimately, cycle-life characteristics and rapid charging performance of the rechargeable lithium battery can be secured.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within scope of the appended claims, and equivalents thereof.

### <Description of Symbols>

100: rechargeable lithium battery
112: negative electrode plate
113: separator
114: positive electrode plate
120: battery case
140: sealing member

## Claims

1. A rechargeable lithium battery, comprising:
a positive electrode plate (114),
a negative electrode plate (112), and
an electrolyte comprising an electrolyte additive,
wherein a current density of the rechargeable lithium battery is about 5.4 mA/cm² to about 6.6 mA/cm²; and
the electrolyte additive comprises a polyalkylene glycol-based copolymer.

2. The rechargeable lithium battery as claimed in claim 1, wherein
the electrolyte additive is a copolymer comprising Repeating Unit 1:
[Repeating Unit 1] 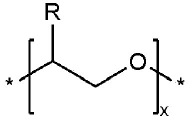 wherein, in Repeating Unit 1,
R is a hydrogen atom or an alkyl group having 1 to 20 carbon atoms; and
x is an integer from 1 to 20.

3. The rechargeable lithium battery as claimed in one of claims 1 or 2, wherein the electrolyte additive is a block copolymer comprising Repeating Units 1-1 and 1-2:
[Repeating Unit 1-1] 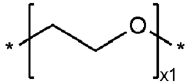 [Repeating Unit 1-2] 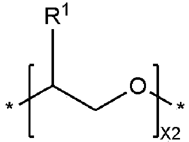 wherein, in Repeating Units 1-1 and 1-2,
R¹ is an alkyl group having 1 to 20 carbon atoms; and
x1 and x2 are each independently integers from 1 to 20.

4. The rechargeable lithium battery as claimed in at least one of the preceding claims, wherein
the electrolyte additive is a block copolymer represented by Chemical Formula 1: 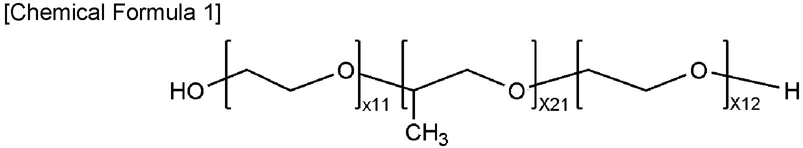 wherein, in Chemical Formula 1,
x11, x12, and x21 are each independently integers from 1 to 20.

5. The rechargeable lithium battery as claimed in at least one of the preceding claims, wherein
a content of the electrolyte additive in 100 wt% of the electrolyte is 0.03 wt% to 0.5 wt%.

6. The rechargeable lithium battery as claimed in at least one of the preceding claims, wherein
the electrolyte further comprises a lithium salt and a non-aqueous organic solvent.

7. The rechargeable lithium battery as claimed in claim 6, wherein
the lithium salt comprises at least one selected from the group comprising: LiPF₆, LiBF₄, LiPF₂(C₂O₄)₂, LiBF₂(C₂O₄), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N, LiC₄F₉SO₃, LiClO₄, LiAlO₂, LiAlCl₄, LiCI, Lil, LiB(C₂O₄)₂ and LiN(CₓF₂ₓ₊₁SO₂)(C_{y}F_{2y+1}SO₂), wherein x and y are each independently integers from 1 to 20.

8. The rechargeable lithium battery as claimed in claims 6 or 7, wherein
a concentration of the total lithium salt is in a range from 0.1 M to 2.0 M.

9. The rechargeable lithium battery as claimed in at least one of claims 6 to 8, wherein
the non-aqueous organic solvent comprises at least one selected from the group comprising: a carbonate-based solvent, an ester-based solvent, an ether-based solvent, a ketone-based solvent, an alcohol-based solvent, or an aprotic solvent.

10. The rechargeable lithium battery as claimed in at least one of claims 6 to 9, wherein
the non-aqueous organic solvent comprises a carbonate-based solvent comprising a cyclic carbonate and a chain carbonate mixed together in a volume ratio of 5:95 to 50:50; wherein the cyclic carbonate comprises ethylene carbonate (EC), and
the chain carbonate comprises ethylmethyl carbonate (EMC) and dimethyl carbonate (DMC).

11. The rechargeable lithium battery as claimed in one of the preceding claims, wherein
the positive electrode plate (114) comprises a positive electrode mixture layer, and
a loading amount of the positive electrode plate is about 50.1 mg/cm² to about 65.0 mg/cm²; and
a mixture density of the positive electrode plate is about 2.0 g/cc to about 6.0 g/cc.

12. The rechargeable lithium battery as claimed in claim 11, wherein
the positive electrode mixture layer comprises a positive electrode active material, and
the positive electrode active material comprises a lithium nickel-based composite oxide represented by Chemical Formula A1:
[Chemical Formula A1] Liₐ₁Niₓ₁M¹_{y1}M²_{z1}O_{2-b1}X_{b1}
wherein, in Chemical Formula A1,
0.9≤a1≤1.2, 0.7≤x1≤1, 0≤y1≤0.2, 0≤z1≤0.2, 0.9≤x1+y1+z1≤1.1, and 0≤b1≤0.1;
M¹ and M² are each independently one or more elements selected from Al, B, Ba, Ca, Ce, Co, Cr, Cu, Fe, Mg, Mn, Mo, Nb, Si, Sr, Ti, V, W, and Zr; and
X is one or more elements selected from F, P, and S.

13. The rechargeable lithium battery as claimed in one of the preceding claims, wherein
the negative electrode plate (112) comprises a negative electrode mixture layer, and
a loading amount of the negative electrode plate is 28.2 mg/cm² to 39.2 mg/cm², and
a mixture density of the negative electrode plate is 1.40 g/cc to 1.80 g/cc.

14. The rechargeable lithium battery as claimed in claim 13, wherein:
the negative electrode mixture layer comprises a negative electrode active material, and
the negative electrode active material comprises at least one selected from graphite and Si composite; and
the Si composite comprises a core comprising Si particles and amorphous carbon.

15. The rechargeable lithium battery as claimed in claim 14, wherein:
the core comprising the Si particles comprises at least one selected from a Si composite, SiOₖ (0 < k ≤ 2), and an Si alloy; and preferably,
the Si-C composite comprises a core comprising Si particles and amorphous carbon.
